Europäisches Patentamt

European Patent Office

Office européen des brevets

Publication number: **0 272 837**

**A2**

## EUROPEAN PATENT APPLICATION

(21) Application number: 87310798.1

(22) Date of filing: 09.12.87

(51) Int. Cl.⁴: **G06F 9/46**

(30) Priority: 22.12.86 US 941704

(43) Date of publication of application:
**29.06.88 Bulletin 88/26**

(84) Designated Contracting States:
**BE DE FR GB IT NL SE**

(71) Applicant: **AMERICAN TELEPHONE AND
TELEGRAPH COMPANY
550 Madison Avenue
New York, NY 10022(US)**

(72) Inventor: **Bishop, Thomas Patrick
2505 Lincolnwood Court
Aurora Illinois 60505(US)**
Inventor: **Fish, Robert Wayne
29W271 Canterbury Drive
West Chicago Illinois 60185(US)**
Inventor: **Peterson, James Stuart
255 Peppertree Lane
Aurora Illinois 60505(US)**

(74) Representative: **Watts, Christopher Malcolm
Kelway, Dr. et al
Western Electric Company Limited 5,
Mornington Road
Woodford Green Essex, IG8 0TU(GB)**

(54) Inter-process signal handling in a multi-processor system.

(57) There is disclosed a multi-processing arrangement in which processes running on one processor may utilize processes, called stub processes, running on other processors. One problem that occurs with respect to such a system is that signals, which indicate the occurrence of external asynchronous events, must be processed in a specified order if the system is to work properly. Disclosed is a system for insuring the proper processing of such signals by requiring all such signals to be routed from a receiving process on a adjunct processor to the main user process on the originating processor. Also disclosed is an arrangement for insuring that signals are not lost and that duplicate signals are not processed.

FIG. 1

## INTER-PROCESS SIGNAL HANDLING IN A MULTI-PROCESSOR SYSTEM

Background of the Invention

This invention relates to multi-processor systems and, more particularly to signal processing in such systems where a process, running on one processor, may have extension or auxiliary processes running on one or more other processors.

In traditional computer systems, a single processor is used to control the flow of information and to process that information. When increased capacity, sometimes called throughput, is required, several alternatives have been used. One such alternative is to use a co-processor to help with certain of the tasks. This co-processor, while effective for some situations, cannot be used for unlimited expansion of capacity.

Another approach, and the one traditionally used, is to upgrade the computer system to a larger one having a faster processor. The original computer system can be eliminated or assigned to some other task. Of course, in any such upgrade, it is imperative that the programs (processes) written for use on the original system continue to be usable on the upgraded system. Thus, the "new" upgraded system must be transparent to the existing programs.

In concurrently filed, co-pending patent application, titled "Virtual Execution of Programs on a Multi-Processor System" in the names of Bishop, Fish, Peterson and Tuvell (6-3-3-1), which application is hereby incorporated by reference herein, there is disclosed a multi-processor system where independent processors are used to simultaneously execute the programs running on the system. Such a system is a forward step and should allow for vastly improved throughput and processing capabilities. However, as with most advances in the computer art, several problems become significant. For multi-processing, these problems must first be identified and then solved in order to take advantage of the increased capability multi-processing offers. Before progressing further, a brief discussion of signals and interrupts will be undertaken to provide a common foundation for understanding some of the problems inherent in multi-processing systems.

Signals and interrupts will be briefly explained with respect to the UNIX (Trademark at AT&T) operating system which is described in an article entitled "UNIX Implementation," which appeared in the *Bell System Technical Journal*, July-August 1978, Vol. 57, No. 6. In addition, the book Design of the UNIX Operating System by Maurice Bach, published by Prentice-Hall and copyrighted 1986, will be valuable to those who wish to understand the UNIX system more fully. It should, of course, be understood that the UNIX system is only one example of a system which could utilize the concepts taught herein. The above-cited references are hereby incorporated by reference herein.

Many operating systems, including the UNIX operating system, provide running programs the ability to detect the occurrence of asynchronous events. By *asynchronous event* we mean any event which occurs independently of what the running program is doing at the time the event occurs. An example of an asynchronous event is when the user pushes the *break* key on a terminal. Within an operating system kernel (the term kernel and its definition are found in the *BSTJ* article referenced above) an I/O interrupt is a common example of an asynchronous event. The UNIX system uses *signals* to inform running programs of the occurrence of certain asynchronous events. Some of these signals have predefined meanings, and some signals are left to be defined by user programs.

We say that a running program, sometimes called a process, is *sent* a signal when the occurrence of an asynchronous event is recorded in its process control block. Running processes may send each other signals by using a particular UNIX system call, or the UNIX system kernel may send signals internally to running processes. We say that a process *receives* the signal when the receiving process becomes the currently-running process, and the kernel detects that a signal has been sent (written in its process control block) and takes some action. Processes can be arranged into groups and the UNIX operating system will allow signals to be sent to every process in a process group.

The UNIX operating system allows a running process to specify the action the kernel should take when a process receives a signal. The default action is to terminate the process. A process may, however, request that a particular signal be ignored when it is received. Alternatively, the process may request that the kernel run a particular code segment within the user process's address space when a particular signal is received. This code segment is analogous to an interrupt handler within the kernel, which runs when the processor received a hardware interrupt. When this code segment executes, we say that the process has handled the signal.

The treatment of signals has several facts, namely how the kernel sends a signal to a process, how the process handles a signal, and how a process controls its reaction to signals. To send a signal to a process, the kernel sets a bit in the signal field of the process control block for that process, each bit corresponding to a different signal that may be received.

In UNIX, as in many operating systems, running processes are allowed to request resources that may not be available at the time the request is made. This includes waiting for some event to transpire that has not yet occurred. The UNIX kernel will put the process "to sleep," waiting for the resource to become available or for the event to occur, when the process will be reawakened. Such sleeps are defined as breakable or unbreakable. A breakable sleep is one that can be "broken" by either the event or resource for which the process is waiting (the original reason for putting the process to sleep) or the arrival of a signal which is not currently specified to be ignored. (Remember, a process can specify which signals are to be ignored). An unbreakable sleep is one that can be "broken" only by the event or resource for which the process is waiting. The arrival of a signal will not break such a sleep even if the signal is not being ignored by the process.

If the process is sleeping in a breakable sleep, the kernel awakens the process when a signal which is not being ignored arrives. At this point the job of the sender is complete. As will be discussed, since a signal is a single bit, a process can remember different types of signals, but it has no way to remember how many signals it receives of a particular type.

The kernel, on behalf of the currently running process, checks for receipt of a signal when a process is about to return from kernel mode to user mode and when it enters or leaves the sleeping state. The kernel, on behalf of the currently running process, handles signals only when a process returns from kernel mode to user mode. Thus, a signal does not have an immediate effect on a process running in kernel mode (except perhaps to have broken a breakable sleep). If a process is running in user mode, and the kernel handles an interrupt that causes a signal to be sent to the process, the kernel will recognize and perform the specified action when it returns from the interrupt. Thus, a process never executes in user mode before handling outstanding signals.

The process control block for the process contains two important data structures with regard to signals. The first is a 32-bit flag word, one bit for each of the 32 possible signals. Each bit is set to one (1) when a signal is sent and set to zero (0) when the signal is ignored or handled. The second data structure is a 32-word array, one word for each of the 32 possible signals. Each word records the process-specified action to be taken upon receipt of that particular signal. Notice that specifying the action with regard to one type of signal has no effect on the specification of the action for other signals.

Let us now return to a discussion of the problems of multi-processing systems. One such problem is in the area of interrupt processing when a special situation must be handled. The problem arises because a process running under control of a first processor (perhaps in response to a command, or stimuli, from a system user) will cause sub-processor, or stub processes, to be generated. These stub processes then run under control of one or more other processors.

Now, assume for a moment that a stimulus arrives at one of these stub processes requesting an immediate action. Since the system is designed so that each processor can operate independently, and since each stub process is being controlled by its own processor, an interrupt signal could easily be processed by the stub process without regard to the other processes, perhaps running under control of a different processor, which are relying on the results of the stub process.

One possible solution to this problem would be to build a system map of all processes and stub processes and their respective processors so that any processor could deal effectively with special stimuli. This solution, however, involves a vast overhead in time and control and becomes increasingly more complex as the number of processes and processors increase. Even with such a system, the situation could arise where a stub process receives an interrupt stimulus even before it begins to process the original request. Thus, if special precautions were not taken, the processors could lose signals or respond to the same signal twice. Accordingly, a need exists for an efficient and correctly functioning system of handling signals in a multi-processing system.

These and other problems have been solved by us by arranging a multi-processor system in a manner such that all signals, regardless of which processor initially sends the signal, are sent to the user process and examined by the processor on which the user process is running before any action is taken by the stub process. The user processor then must forward the proper signals to any active stub process. We have designed several algorithms for insuring that all signals are processed at the proper time and that "windows" of ambiguity, which arise because of time delays between activations of processes on different processors, do not result in lost or duplicated signals.

In one example, we have used the UNIX operating system and duplicated the system into several processors, each having user processes and kernel processes. The processors exchange information by way of packet data transfer. An extended process consists of the user portion of the process (that is, the process responsible for executing the user's program) and any stub processes which exist on other processors which act as agents for the user process on their respective processors (when the user process makes a request that must be sent to another processor). It is important to note that only one part of an extended process, either the user portion or one of its stubs, is active at any point in time.

In our example, the signal-handling code fragment is always executed on the processor local to the user portion of an extended process. Using our arrangement, the user's kernel must send the current signal result (that is, whether a signal has been received which is not being ignored) to a stub process with any stub packet, and any updated signal result must be sent to an active stub process, if any non-ignored signals are subsequently received by the user's process before the stub process responds. This is defined as the pseudo-signal state. This is necessary because the stub process could be in a breakable sleep. Such a process must be informed of any non-ignored signal sent to the extended process. In addition, the stub process must clear its copy of the signal result before going to sleep trying to obtain the user's next request, and "OR" the signal result obtained from the packet when the stub starts to process the user's request.

After the user process receives the stub process's response and is reawakened, the user process must make sure that the stub process's copy of the signal result is cleared before sending the stub process another request. This is necessary to insure that a stub process does not, due to an updated pseudo-signal state and a stub reply passing each other in mid-stream, process the same signal twice.

In addition, each kernel is arranged to maintain a linked list of table entries which have signals to be sent or forwarded and a system process running at base level that removes signals from the list and forwards them to the correct destination via a communication channel to each processor. Thus, an important aspect of our system is that each processor has a dispatchable entity referred to as the signal handler whose sole function is to forward signals to other processors.

## Brief Description of the Drawings

These and other objects and features, together with the operation and utilization of the present invention, will be more apparent from the illustrative embodiment shown in conjunction with the drawings in which

FIG. 1 shows a mutil-processor system;

FIG. 2 shows a signal state diagram chart;

FIGS. 3 through 8 shown flowcharts of the various functions performed by our system to control signal processing.

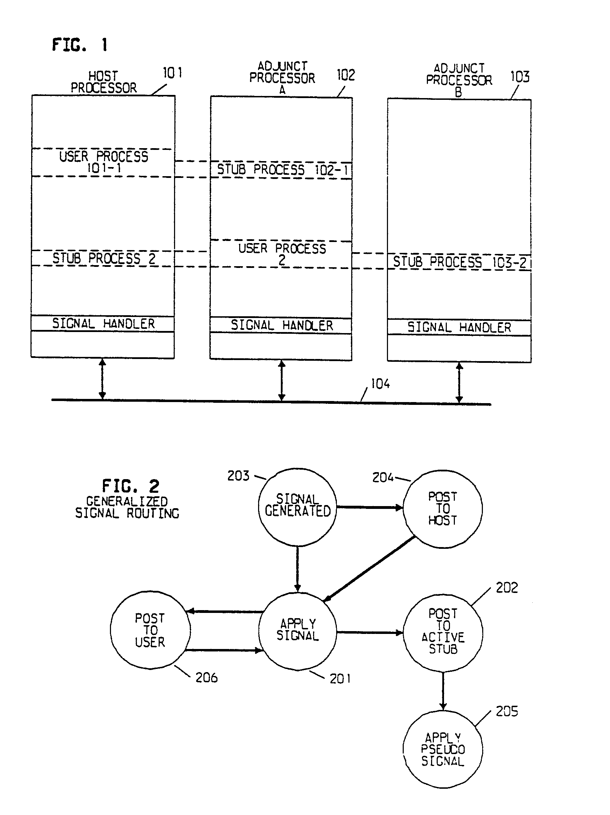

FIG. 1 shows a multi-processor system having a plurality of computers 101 through 103 interconnected by bus 104. Whereas the operating system kernel described by Thompson in the aforementioned reference is restricted to only a single computer, the kernels of FIG. 1 allow a process to be extended over a number of computers. This extended process is a collection of individual special processes running on separate computers and is described in greater detail in the aforementioned Bishop reference. These special processes are also referred to as primary or user and auxilliary or stub processes. Each kernel associated with the extended process maintains a distinct process necessary to allow the extended process to function on the computer controlled by the associated kernel. Each computer has associated memory and I/O devices; however, certain computers may be connected to special I/O devices such as telecommunication data interfaces or mass storage devices.

The initiation of a new program in the system illustrated in FIG. 1 results in that program being automatically assigned to an unspecified computer that has processing capacity to spare or which has special I/O resources required by the program. The unspecified computer may be the same computer executing the request or a different computer. The execution of the program can be distributed over a number of computers utilizing one computer which has processing capacity and yet using one or more computers which have the necessary files or special I/O capabilities. When program execution is distributed, an extended process is created.

In the previously referenced article by Thompson, it was noted that a process is a software unit which requires text, data and bss areas of memory and which is identified to the operating system by a process control block. In the operating system described by Thompson, the process control block is contained in one area of memory since that operating system is executed on a uniprocessor system. In the system illustrated in FIG. 1, for example, the process control block is distributed among all the computers which are associated with the extended process. The extended process consists of a user process and a number of stub processes. The user process has text, data and bss areas of memory in addition to the process control block. A stub process contains only a portion of the process control block relating to operating system functions pertaining to that particular computer's operations with respect to the extended process as required at any point in time.

The extended process is an entity that dynamically adjusts to supply the required resources of the multi-processor system to allow execution of the program. New stub processes are added to the extended process as other resources are required in different processors of the multi-processor system. The kernel of the processor executing the user process of the extended process automatically detects the need to create a stub process when a system call is made by the user process requiring resources on a new processor. The user process's kernel then communicates with the kernel of the new processor to establish a stub process on the new processor. The establishment of a stub process also includes the creation of a virtual communication channel between the user process and the new stub process. Once established, all subsequent communication flows between the user process and the stub process via the virtual channel.

As described in the article by Thompson, the execution of a new program on a single processor controlled by the UNIX operating system is as follows. First, a fork system call is executed which replicates the executing process into child and parent processes. These processes share the same program, but have different data storage. The child process then executes an exec system call. The execution of the exec system call results in a new program being executed. A more detailed discussion of process control and formation can be found in the aforementioned Bishop reference.

Detailed Description

The solution, as discussed above, to the problems of multi-processing, can be implemented by modifying the basic UNIX operating system as detailed below.

The following are additions or modifications to the process control block which, as discussed above, is the basic process data structure used within the UNIX operating system.

p__flag - This a a 32-bit integer used to contain boolean flags indicating the state of a process. New flags can be added as follows:

SSACT This flag indicates a stub process is currently active, therefore, the user portion of the extended process is waiting for the active stub process to respond before the user portion may continue.

SSISG This flag represents the pseudo-signal state (as will be discussed hereinafter) for an active stub. On the user processor, this is the last signal state sent to the stub. On the stub processor, this is the pseudo-signal which, if TRUE (on), will break a breakable sleep.

SSSIG This flag indicates that an update to the pseudo-signal was sent to the stub after the original request was sent to the stub and, thus, a final pseudo-signal clear request must be sent at the conclusion of the request in order to clean-up.

SSIGP This flag indicates that a group signal is posted against a process and must be forwarded to the processor which records information about process groups.

p__siglink - The field used to link processes on the Siglink list for received signals to be forwarded by a special kernel process to the currently active portion of an extended process.

p__siggrp - The summation of group signals currently posted against a process which have not yet been forwarded.

p__port - If SSACT is on, then this field is populated with information which identifies the processor where the active stub resides.

p__bicid - This field is used to distinguish internally between a stub and a user process. The field contains the identification code of the processor where the user resides.

Shown in FIG. 1 is a multi-processor system, having processors 101, 102 and 103 connected together by bus 104. The kernels which run on these processors run in a more or less dependent fashion. For our example, processor 101 will be deemed the host processor since we will assume that the user process resides on that processor. We have defined a user process as being an extended process meaning that the user code resides on one of the processors (for example, the host processor), and sleepable entities called stub processes, or stubs, reside on any other process. The stub process controls some resource required by the user process. In our system, it is assumed that all processes in the system must either be located on the host processor or at least have a stub residing there. Thus, the hose (process manager) processor is the one processor having knowledge of the locality of every user process in the complex, and also the one processor having knowledge of the process groups. Thus, process group signals are always first sent to the host processor.

When a user process, such as process 101-1, requires a remote resource, a request is sent over bus 104 to its associated stub, such as stub 102-1 on the required processor. A response from stub 102-1 is always expected, thus user process 101-1 will drop into an unbreakable sleep awaiting the response.

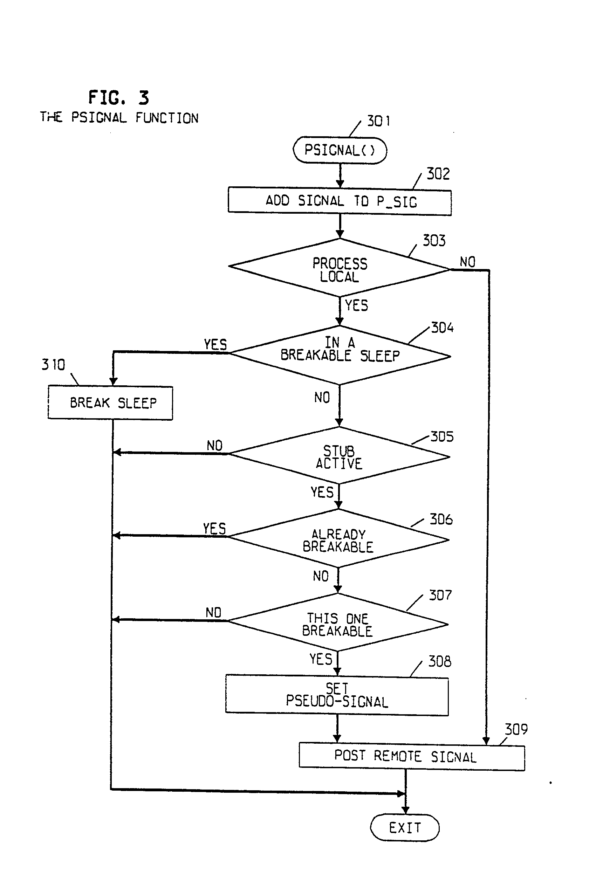

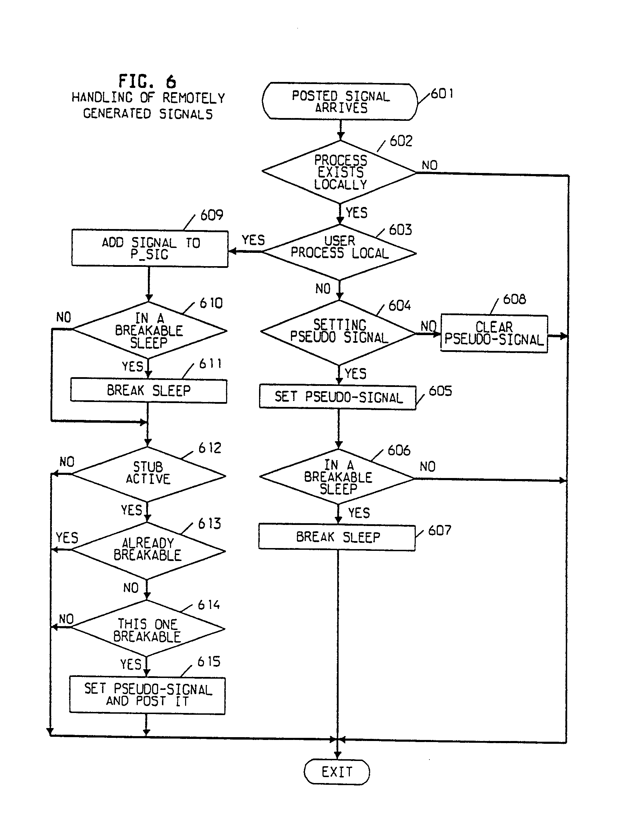

Signals are applied in each processor by inserting the signal into the appropriate data structure and breaking breakable sleeps. In the context of FIG.2, there is shown the concept of forwarding the signal to another processor in the system. This is referred to as "posting" and is shown in the transaction between nodes 201 and 202. In FIG 2, "apply signal" node 201 corresponds to the flowcharts shown in FIGS. 3 and 6.

At the arrival of signal in the system, as from node 203, if the process is locally known, it will be applied locally by routing it to the user process, and, if the process is not locally known, it will be routed to the host processor which does know the location of all processes.

As will be seen, and as will be detailed further, the user process has the signal applied to its signal word and, if the disposition of the signal is such that it would break a breakable sleep, and the user currently has a stub request outstanding and that original request did not indicate that a signal already was outstanding that would break a sleep and such information had not been previously posted to the stub, then at this time this information will be posted to the stub.

The posting of the previous information to the stub process results in a pseudo-signal, node 205, on the stub which is used solely to break a breakable sleep in the manner to be discussed.

As shown in FIG. 3, a stub is active if the SSACT flag is set in the p_flag word.

The active stub has already been informed of a signal which would break a sleep if the SSISG flag is set in the p_flag word.

The SSISG flag is in fact the pseudo-signal.

A signal having the potential to break a sleep is determined by examining the signal disposition as specified by the user. This information is only maintained on the user processor.

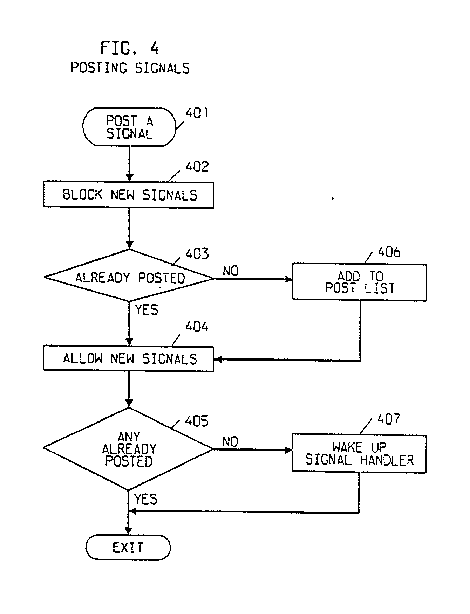

As shown in FIG. 4, "already posted" means the process is already on the linked list of processes called the Siglink. This linked list identifies all processes which have signals associated with them that need to be routed elsewhere in the complex.

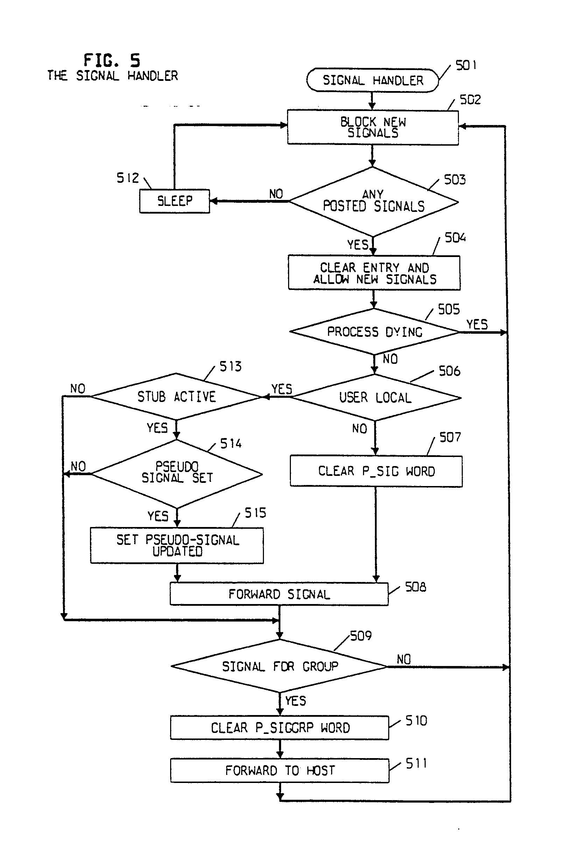

As shown in FIG. 5, the clearing of the p_sig and p_siggrp words actually occur at box "clear entry" in order to take place within the section of code which runs with new signals blocked. They, however, logically belong where they appear in this flowchart. The "clear entry" block primarily means the process currently being examined is removed from the Siglink linked list. Subsequent arrival of new signals may attempt to put it back on this linked list, hence the necessary blockage of new signals for a short period of time.

The blocks "forward to host" and "forward signal" imply abus packet communication which is outside the scope of this discussion.

FIG. 6 represents the activity which occurs when a remotely posted signal arrives at a new processor. Note the similarity between this function and the psignal function. This function is used only internally by the Apache protocol whereas the psignla function is used externally to the Apache protocol.

The existence of any process may change locally before another is aware of it, hence the first check performed here is to verify the process existence.

The second check is necessary because the function services both the arrival of true signals (to the user process) as well as pseudo-signals (both set and cleared) for stub processes.

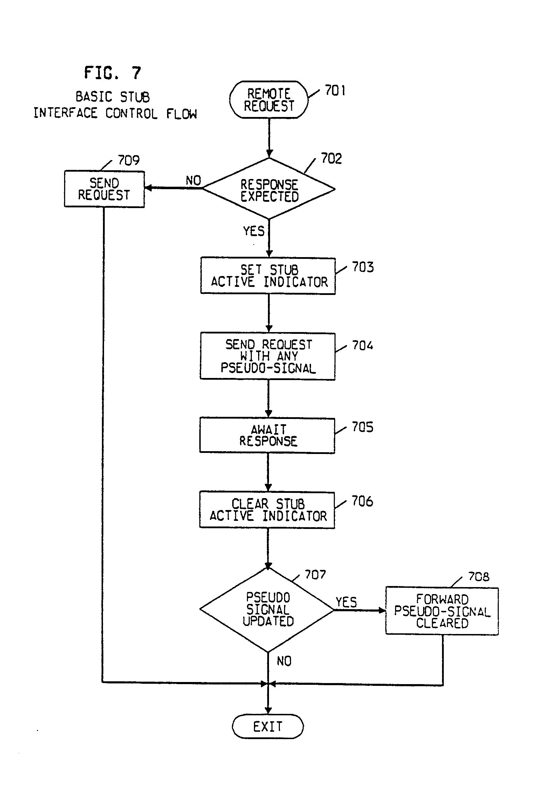

FIG. 7 shows the basic stub interface control flow.

If no response is expected from a request to a stub, then there i sno possibility that the stub can drop into a breakable sleep so such requests do not follow the active stub protocol used for signals.

Setting the stub active indicator (SSACT flag in the p_flag field) also implies setting the p_port field with information which will allows the later identification of an active stub's processor. This is required if a pseudo-signal needs to be forwarded.

When the request completes, if the pseudo-signal had been updated (as indicated by the SSSIG flag in the p_flag word) then a final clear pseudo-signal must be sent.

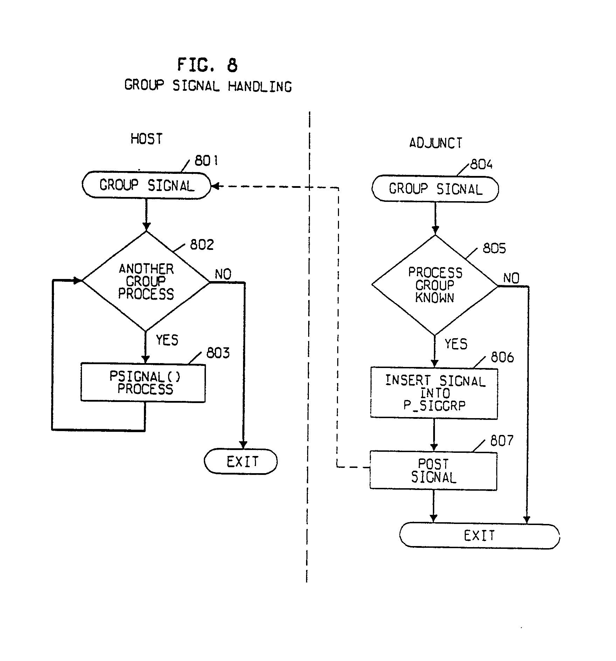

On the host, as shown in FIG. 8, the entire list of active processes is searched looking for those processes corresponding to a process group. Each such process receives the designated signal.

The adjunct simply forwards such group requests via the posting mechanism.

## Claims

1. A signal handling arrangement for use in a multi-processor system wherein a particular process can be run under control of a first one of the processors and wherein stub processes of a particular user process can be run under control of other processors of the multi-processor system, and wherein signals are utilized to inform said processes of asynchronous events occurring external to said process, said signal handling arrangement CHARACTERIZED BY
means associated with each said process for receiving said signals,
means controlled by the processor controlling each said stub process for determining which one of said processors is controlling the running of said user process of said stub process, and
means for routing received ones of said signals of a stub process to said first processor without signal responsive action being taken by said processor controlling said stub process.

2. The signal handling arrangement of claim 1 CHARACTERIZED IN THAT
said signals invoke the running of particular code segments for controlling the running of the process associated with each said signal,
means for generating a signal result as a consequence of running said signal code segments with respect to a user process, and
means for communicating said signal result with respect to a user process to a particular stub process of said user process.

3. The signal handling arrangement of claim 2 CHARACTERIZED IN THAT
each stub process has an active and an inactive state,
means at each stub process for clearing signal results sent from a user process, and
means for preventing a stub process from entering into said active state until previously sent signal results from a user process are cleared by said stub process.

4. The signal handling arrangement of claim 3 CHARACTERIZED IN THAT
said signals and said signal results are interchanged between said processors by the communication of packetized data.

5. The signal handling arrangement of claim 4 CHARACTERIZED IN THAT
said signals and said signal results are bits of said packetized data and wherein said preventing means includes means for setting and removing bits from said packetized data communication.

6. A method for controlling signals in a multi-processor system wherein a particular program can be run under control of first one of the processors and wherein stub processes of a particular user program can be run under control of other processors of the multi-processor system, and wherein signals are utilized to inform said programs of asynchronous events occurring external to said programs, said signal handling method CHARACTERIZED BY
receiving, with respect to each said program, said signals,
determining by the processor controlling each said stub process which one of said processors is controlling the running of said user program of said stub process, and
routing received ones of said signals of a stub process to said parent processor without signal responsive action being taken by said processor controlling said stub process.

7. The signal handling method of claim 6 CHARACTERIZED IN THAT
said signals invoke the running of particular code segments for controlling the running of the process associated with each said signal,
generating a signal result as a consequence running said signal code segments with respect to a user process, and communicating said signal result with respect to a user process to a particular process of said user process.

8. The signal handling method of claim 7 CHARACTERIZED IN THAT
each stub process has an active and an inactive state,
clearing, at each stub process, signal results sent from a user process, and
preventing a stub process from entering into said active state until previously sent signal results from a user processor are cleared by said stub process.

9. The signal handling method of claim 8 CHARACTERIZED IN THAT
said signals and said signal results are interchanged between said processors by the communication of packetized data.

10. The signal handling method of claim 9 CHARACTERIZED IN THAT
said signals and said signal results are bits of said packetized data and wherein said preventing step includes the steps of setting and removing bits from said packetized data communication.

11. A method for controlling the execution of a program in a multi-processor system having a plurality of processors and a communication path interconnecting said plurality of processors, said method CHARACTERIZED BY
establishing a user process on a first one of said processors;
establishing a first stub process on a second one of said processors to be used only by said user process during the execution of said program;
setting up a communication channel between said user process and said first stub process via said communication path;
interchanging over said established communication path signals representative of asynchronously occurring events with respect to said user process and said first stub process, and
redirecting a said signal directed to said first stub process of said user process to said first processor associated with said user process without signal responsive action being taken by said first stub process.

12. The method of claim 11 CHARACTERIZED IN THAT
said signals invoke the running of particular code segments for controlling the running of the process associated with each said signal,
generating a signal result as a consequence of running said signal code segments with respect to a user process, and
communicating said signal result with respect to a user process to a particular stub process of said user process.

7

13. The method of claim 12
CHARACTERIZED IN THAT
each stub process has an active and an inactive state, and wherein said method further comprises the steps of
clearing, at each stub process, signal results sent from a user process, and
preventing a stub process from entering into said active state until previously sent signal results from a user processor are cleared by said stub process.

14. The method of claim 13
CHARACTERIZED IN THAT
said signals and said signal results are interchanged between said processors by the communication of packetized data,
wherein said signals and said signal results are bits of said packetized data, and wherein said preventing step included the steps of setting and removing bits from said packetized data communication.

## FIG. 1

| HOST PROCESSOR 101 | ADJUNCT PROCESSOR A 102 | ADJUNCT PROCESSOR B 103 |
|---|---|---|
| USER PROCESS 101-1 | STUB PROCESS 102-1 | |
| STUB PROCESS 2 | USER PROCESS 2 | STUB PROCESS 103-2 |
| SIGNAL HANDLER | SIGNAL HANDLER | SIGNAL HANDLER |

104

## FIG. 2
### GENERALIZED SIGNAL ROUTING

203 — SIGNAL GENERATED → 204 — POST TO HOST

POST TO USER — 206

APPLY SIGNAL — 201

POST TO ACTIVE STUB — 202

APPLY PSEUDO SIGNAL — 205

## FIG. 3
THE PSIGNAL FUNCTION

```
                        ┌─────────────┐
                        │  PSIGNAL()  │  301
                        └─────────────┘
                               │
                        ┌─────────────────────┐
                        │ ADD SIGNAL TO P_SIG │  302
                        └─────────────────────┘
                               │
                          ╱─────────╲
                         ╱  PROCESS   ╲        NO
                        ╱    LOCAL     ╲──────────────►
                         ╲            ╱   303
                          ╲─────────╱
                               │ YES
                          ╱─────────────╲
              YES        ╱     IN A       ╲
        ◄───────────────╱ BREAKABLE SLEEP  ╲   304
                         ╲                 ╱
                          ╲─────────────╱
   ┌─────────────┐             │ NO
   │ BREAK SLEEP │  310    ╱─────────╲
   └─────────────┘        ╱   STUB    ╲    NO
                      ◄──╱   ACTIVE    ╲───────
                          ╲           ╱   305
                           ╲─────────╱
                               │ YES
                          ╱─────────────╲
              YES        ╱    ALREADY     ╲
        ◄───────────────╱   BREAKABLE     ╲   306
                         ╲               ╱
                          ╲─────────────╱
                               │ NO
                          ╱─────────────╲
              NO         ╱   THIS ONE     ╲
        ◄───────────────╱   BREAKABLE     ╲   307
                         ╲               ╱
                          ╲─────────────╱
                               │ YES
                        ┌─────────────┐
                        │     SET     │  308
                        │PSEUDO-SIGNAL│
                        └─────────────┘
                               │
                        ┌─────────────────────┐
                        │ POST REMOTE SIGNAL  │  309
                        └─────────────────────┘
                               │
                        ┌─────────────┐
                        │    EXIT     │
                        └─────────────┘
```

0 272 837

# FIG. 4
POSTING SIGNALS

```
        ┌─────────────┐  401
        │  POST A     │
        │  SIGNAL     │
        └──────┬──────┘
               │
               ▼          402
        ┌─────────────────┐
        │ BLOCK NEW SIGNALS│
        └────────┬────────┘
                 │
                 ▼       403                              406
           ╱─────────────╲        NO          ┌──────────────┐
          ╱ ALREADY POSTED ╲────────────────▶ │   ADD TO     │
          ╲               ╱                    │  POST LIST   │
           ╲─────────────╱                     └───────┬──────┘
                 │ YES                                  │
                 ▼          404                         │
        ┌─────────────────┐                             │
        │ ALLOW NEW SIGNALS│◀───────────────────────────┘
        └────────┬────────┘
                 │
                 ▼       405                              407
           ╱─────────────╲        NO          ┌──────────────┐
          ╱     ANY       ╲────────────────▶ │   WAKE UP     │
          ╲  ALREADY      ╱                   │ SIGNAL HANDLER│
           ╲  POSTED     ╱                     └───────┬──────┘
            ╲───────────╱                              │
                 │ YES                                 │
                 ▼◀───────────────────────────────────┘
           ┌──────────┐
           │   EXIT   │
           └──────────┘
```

## FIG. 5
### THE SIGNAL HANDLER

```
                                    SIGNAL HANDLER        501

                                    BLOCK NEW            502
                                    SIGNALS

         512                              ANY                503
         SLEEP  ◄──── NO ──── POSTED SIGNALS

                                        YES
                                    CLEAR ENTRY AND      504
                                    ALLOW NEW SIGNALS

                                    PROCESS DYING   ── YES   505

                                        NO

    513                              506
NO ── STUB ACTIVE ◄── YES ── USER LOCAL

         YES                            NO
                514                                     507
NO ── PSEUDO                        CLEAR P_SIG WORD
      SIGNAL SET

         YES
    SET PSEUDO-SIGNAL   515
    UPDATED

              FORWARD SIGNAL        508

              SIGNAL FOR GROUP  ── NO    509

                  YES
         CLEAR P_SIGGRP WORD         510

         FORWARD TO HOST            511
```

## FIG. 6
### HANDLING OF REMOTELY GENERATED SIGNALS

```
                              ┌──────────────────┐
                              │  POSTED SIGNAL   │  601
                              │     ARRIVES      │
                              └──────────────────┘
                                      │
                                      ▼
                                 ╱ PROCESS ╲   602
                    NO         ╱   EXISTS    ╲
              ◄──────────────  ╲   LOCALLY   ╱
                               ╲            ╱
                                      │ YES
                                      ▼
   609                           ╱  USER  ╲   603
┌──────────────┐    YES        ╱  PROCESS  ╲
│ADD SIGNAL TO │◄────────────  ╲   LOCAL    ╱
│    P_SIG     │               ╲          ╱
└──────────────┘                    │ NO
        │                           ▼
        ▼                      ╱ SETTING ╲  604      608
   ╱  IN A  ╲  610            ╱  PSEUDO   ╲   NO   ┌──────────────┐
  ╱ BREAKABLE ╲     NO        ╲  SIGNAL   ╱ ─────► │    CLEAR     │
  ╲   SLEEP   ╱ ─────►┐       ╲          ╱         │PSEUDO-SIGNAL │
  ╲          ╱        │            │ YES           └──────────────┘
        │ YES  611    │            ▼
        ▼             │    ┌──────────────────┐  605
 ┌────────────┐       │    │ SET PSEUDO-SIGNAL│
 │ BREAK SLEEP│       │    └──────────────────┘
 └────────────┘       │            │
        │◄────────────┘            ▼
        ▼                     ╱  IN A  ╲   606
   ╱  STUB  ╲  612    NO     ╱ BREAKABLE ╲    NO
  ╱  ACTIVE  ╲ ─────►┐       ╲   SLEEP   ╱ ─────►
  ╲          ╱       │       ╲          ╱
        │ YES        │            │ YES
        ▼            │            ▼
   ╱ ALREADY ╲ 613   │    ┌────────────┐  607
  ╱ BREAKABLE ╲ YES  │    │ BREAK SLEEP│
  ╲          ╱ ─────►│    └────────────┘
        │ NO         │
        ▼            │
   ╱ THIS ONE ╲ 614  │
  ╱ BREAKABLE ╲  NO  │
  ╲          ╱ ─────►│
        │ YES        │
        ▼            │
 ┌──────────────┐ 615│
 │SET PSEUDO-SIGNAL│ │
 │ AND POST IT  │   │
 └──────────────┘   │
        │◄──────────┘
        ▼
   ┌────────┐
   │  EXIT  │
   └────────┘
```

## FIG. 7

BASIC STUB
INTERFACE CONTROL FLOW

REMOTE
REQUEST — 701

702

RESPONSE
EXPECTED

SEND
REQUEST — 709

NO

YES

SET STUB
ACTIVE INDICATOR — 703

SEND REQUEST
WITH ANY
PSEUDO-SIGNAL — 704

AWAIT
RESPONSE — 705

CLEAR STUB
ACTIVE INDICATOR — 706

707

PSEUDO
SIGNAL
UPDATED

YES

FORWARD
PSEUDO-SIGNAL
CLEARED — 708

NO

EXIT

# FIC. 8
## GROUP SIGNAL HANDLING

HOST

801 GROUP SIGNAL

802 ANOTHER GROUP PROCESS
NO
YES

803 PSIGNAL() PROCESS

EXIT

ADJUNCT

804 GROUP SIGNAL

805 PROCESS GROUP KNOWN
NO
YES

806 INSERT SIGNAL INTO P_SIGGRP

807 POST SIGNAL

EXIT